# EUROPEAN PATENT SPECIFICATION

(11) **EP 3 554 215 B1**
(45) Date of publication and mention of the grant of the patent: **27.12.2023**
(21) Application number: 18732907.3
(22) Date of filing: 25.05.2018
(51) Int. Cl.: A01D 34/62

(54) **IMPROVED CUTTING MACHINE**
VERBESSERTE SCHNEIDMASCHINE
MACHINE AMÉLIORÉE DE COUPE

(30) Priority: 26.05.2017 IT 201700057717
(43) Date of publication of application: 23.10.2019
(73) Proprietor: Tierre Group S.r.l., 35010 Curtarolo (PD) (IT)
(72) Inventor: TISO, Aldo, deceased (IT)
(74) Representative: Cantaluppi, Stefano
(86) International application number: PCT/IB2018/053736
(87) International publication number: WO 2018/215983

(56) References cited:
- EP-A1- 2 997 802
- EP-A2- 1 869 963
- WO-A1-2010/038208
- GB-A- 1 574 189

## Description

The present invention refers to a cutting machine of the type that includes a body with two juxtaposed lateral sides and a hood mounted between said sides for delimiting a cutting chamber, said chamber having a rear opening for discharging the cut material, a rotor that is rotatably supported in said chamber between said sides, an end element supported between said sides at said rear opening of said chamber and an optionally removable closure element that is supported between said sides and operatively associated with the end element.

Machines including said characteristics are known from the current production of the applicant themselves.

An example of agricultural working device is disclosed in EP 2997802 A1.

Depending on the durability of the various components and on the type of blades (or hammers) used on the rotor, these machines can be used for more or less heavy work, ranging from a simple lawn or straw cutting all the way to the cutting of stalks, shoots and wood.

Once again depending on the type of material handled, as well as on the agronomic requirements of the processing that follows the cutting, the machines can shred the material handled to a more or less fine degree.

As a technical objective, the invention proposes to facilitate the adjustment of said shredding in a particularly convenient manner, including in the field.

The objective is accomplished by a machine of the type indicated, produced in accordance with one or more of the claims attached hereto.

According to the invention, a cutting machine comprises:
- a body with, that is having, two juxtaposed lateral sides and a hood mounted between said sides for delimiting a cutting chamber, the chamber having a rear opening for discharging the cut material,
- a rotor that is rotatably supported in the chamber between the sides,
- an end element supported between the sides at the rear opening of the chamber and
- a closure element supported between the sides.

The closure element and the end element are mounted on the sides so as to be movable between a first position, in which the end element is moved back from the rotor and the closure element is oriented in a position that is close to the end element, so as to close the opening, at least in part, in order to hold the cut material in the chamber for longer, and a second position, in which the end element is moved closer to the rotor than in the first position and the closure element is oriented in a position remote from the end element so as to substantially free the opening and to facilitate discharging of the cut material from the chamber.

This results in a variation in the shape of the cutting chamber, which is to say the versatility of the cutting machine according to the invention is increased. According to a first alternative of the invention, the end element is a levelling roller and the closure element a scraper.

According to an aspect of the invention, at least three holes can be provided in each side in order to mount a support for the roller, a pin being engaged in a first hole in the side and in a corresponding first hole in the support, by means of which pin each support is hinged to the corresponding side, a screw alternatively being engaged in a second and third hole in the side and passing through a second hole in the support in order to fix the roller to the corresponding side in one position and in the other position, respectively, of said first and second positions.

Such a characteristic is particularly useful for moving the end element between said first and second position.

According to a second alternative of the invention, the end element is a refinement grid or a laminar element without any holes.

According to an aspect of the invention, at least three holes can be provided in each side in order to mount a plate of the end element, a pin being engaged in a first hole in the side and in a corresponding first hole in a plate of said end element, by means of which pin each plate is hinged to the corresponding side, a screw alternatively being engaged in a second and third hole in the side and passing through a second hole in the plate of said end element in order to fix said end element to the corresponding side in one position and in the other position, respectively, of said first and second positions.

Such a characteristic is particularly useful for moving the end element between said first and second position.

According to an aspect of the invention, a sequence of first holes can be made in each side, which holes are arranged along a curvilinear axis so as to be equidistant from the second or third hole in the side.

Such a characteristic is particularly useful for increasing the number of possible configurations of the chamber.

According to an aspect of the invention, the first hole can comprise a pair of curvilinear segments that form a substantially V-shaped profile.

According to an aspect of the invention, said cutting machine can comprise fastening means for fastening the closure element to the sides so as to be able to adjust the position of said closure element with respect to the sides. The fastening means can comprise a plurality of holes in each side in order to fix the closure element by means of pins and/or screws.

According to an aspect of the invention, a plurality of holes can be provided in each side in order to fix the closure element in one position and in the other position, respectively, of said first and second positions.

According to an aspect of the invention, the cutting machine can include, that is comprise, a rod of counter-blades that is removably mounted between the sides near to said closure element.

Such a characteristic is particularly useful for keeping insufficiently cut organic remains in the cutting chamber until they have been completely shredded. According to an aspect of the invention, the cutting machine can include, that is comprise, a frame provided for attachment at three points in order to be mounted on either the front or the back of an agricultural tractor.

The characteristics and advantages of said cutting machine will become clearer from the detailed description that follows of a preferred, but not exclusive, embodiment that is illustrated by way of non-restrictive example, with reference to the attached drawings, in which:
- Figure 1 is a perspective view of a cutting machine according to the invention,
- Figures 2A and 2B are rear views of the machine from Figure 1 according to two different operative configurations,
- Figure 3 is a side view of the machine from Figure 1,
- Figures 4 and 5 are side views of further embodiments of a cutting machine according to the invention,
- Figure 6 is a schematic view in partial cross-section of the cutting machine from Figure 1 in a first operative adjustment,
- Figures 7 and 8 are schematic views in partial cross-section of a cutting machine according to the invention in various operative adjustments,
- Figures 9A and 9B are rear views of a further embodiment of a cutting machine according to the invention according to two different operative configurations,
- Figures 10A e 10B are rear views of another embodiment of a cutting machine according to the invention according to two different operative configurations, and
- Figure 11 shows a cutting machine according to the invention mounted on the front of an agricultural tractor.

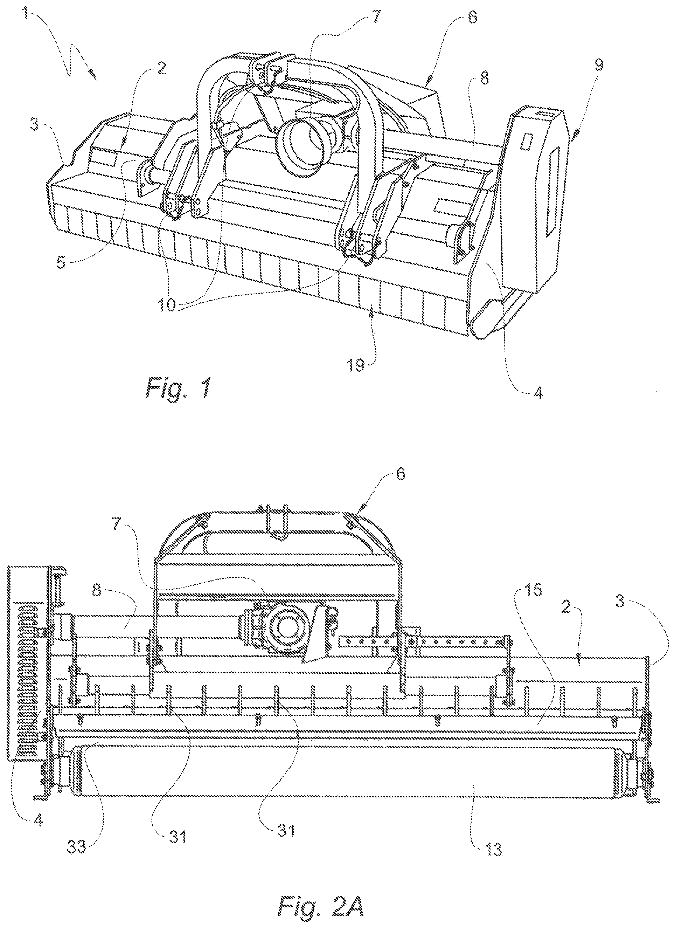

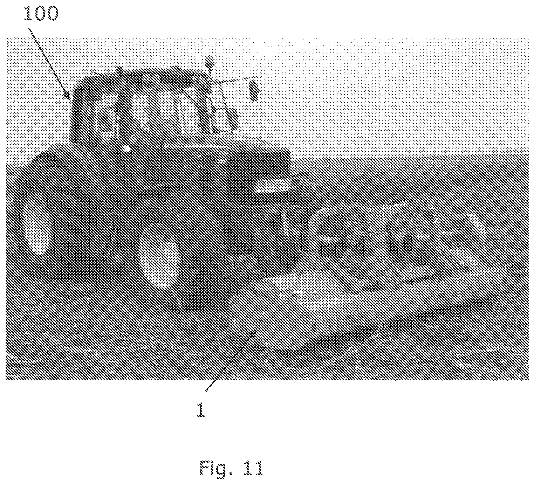

In the figures, the number 1 indicates a cutting machine that is visible in Figure 1 with its essential components. The machine 1 comprises a body 2 formed by two juxtaposed sides 3, 4 which close it off bilaterally, and a hood 5 which closes it off at the top. Preferably, a frame 6 and a gearbox 7 with an angular gear are mounted on the body 2, which gearbox connects to a transmission 9 mounted on one of the sides by means of a shaft housed in a tubular element 8. The frame 6 is provided with a three-point attachment 10 which allows for mounting on either the front or the back of an agricultural tractor 100 (illustrated by way of example in Figure 11), so as to use the machine with various types of tractors.

A rotor 11, equipped with blades or hammers 12, and an end element 13 are rotatably supported between the sides 3, 4. The rotor 11 is drivingly fastened to the transmission 9.

In particular, the end element 13 is an organ of the cutting machine 1 that is intended to come into contact with the ground, or to be placed in the vicinity of the ground, while the aforementioned machine is being used.

With reference to Figures 1-8, the end element 13 is a levelling roller that is mounted disengaged on the sides 3, 4 by means of two respective supports 14 with bearings.

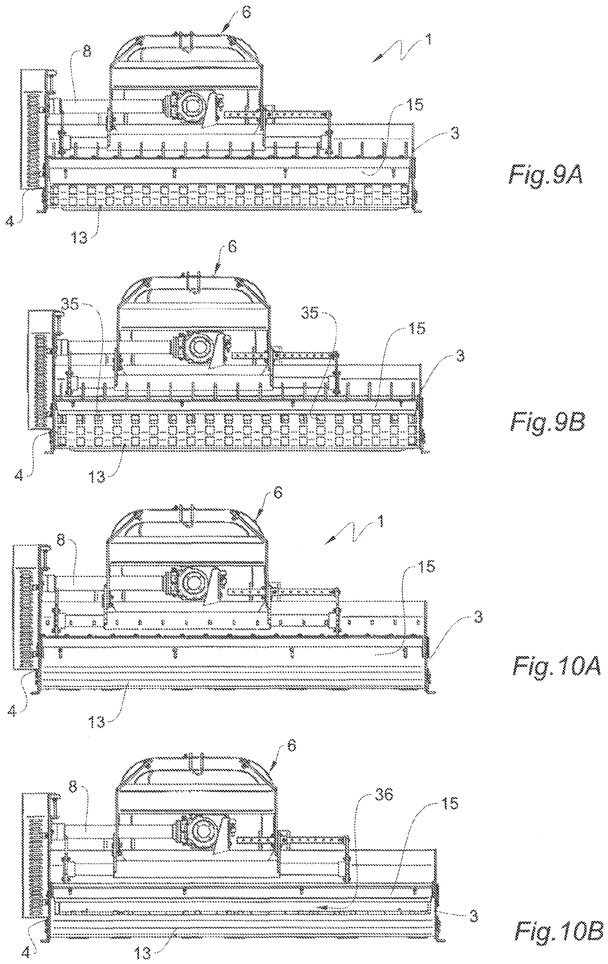

Alternatively, the end element 13 can be a refinement grid (Figures 9A and 9B), particularly adapted for olive tree pruning work, or a laminar element without any holes (Figures 10A and 10B), particularly adapted to work on vegetables.

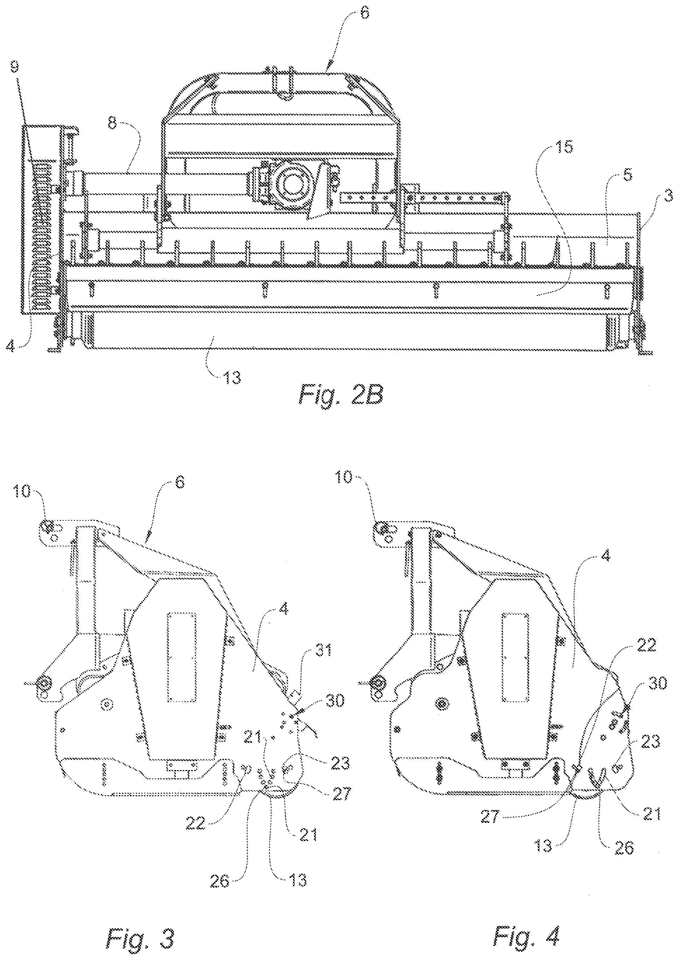

A closure element 15 is supported between the sides 3, 4 and is preferably operatively associated with the end element 13 in order to pass between two fixing positions, respectively illustrated in Figures 2B, 6, 9A, 10A and 2A, 8, 9B, 10B.

In particular, the closure element 15 is supported between the sides 3, 4 by means of respective perforated plates 16a. Preferably, the closure element 15 is a slab-shaped element 16 extending between the sides 3, 4 and fastened in an adjustable manner to said sides by means of the respective plates 16a.

With reference to the Figures 1-8, the closure element 15 is a scraper with an adjustable doctor blade 16, which scraper is supported between the sides 3, 4 by means of the respective perforated plates 16a.

Sides 3, 4, hood 5, end element 13 and closure element 15 collectively delimit a cutting chamber 29 in which the rotor 11 shreds the material to be cut to a more or less fine degree. A chamber 29 of this kind is closed on the front by a series of swivel panels 19 and is provided on the rear with an opening 20 that can be choked.

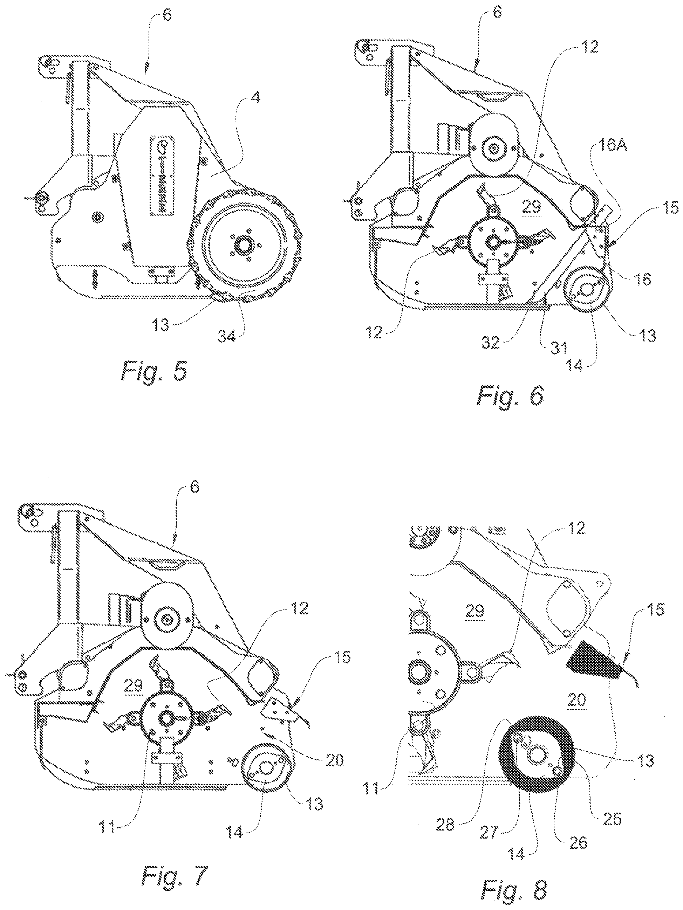

The choking of the rear opening 20 is adjusted by positioning the closure element 15 and the end element 13, which are mounted for this purpose on the respective sides 3, 4 so as to be movable between a first position (Figure 6), in which the end element 13 is further removed (moved back) with respect to the rotor 11 and the closure element 15 is oriented in a position close to the end element 13 so as to, at least in part, close the opening 20 in order to hold the cut material in the chamber for longer, and a second position (Figure 8) in which the end element 13 is moved closer to the rotor 11 than in the first position and the closure element 15 is oriented in a position remote from the end element 13 so as to substantially free the opening 20 and facilitate discharging of the cut material from the cutting chamber.

The shape of the cutting chamber 29 is varied in this manner.

This provision therefore allows for the volume and the shape of the chamber 29 to vary, thereby adapting the machine 1 to various types of work, such as the cutting of grass, straw, stalks, shoots or wood. This results in the cutting machine according to the invention being increasingly versatile.

With particular reference to Figures 1-8, a passage 33 is defined between the roller and the scraper, which passage is preferably completely closed or left open in the case in which the roller and the scraper are in the first position (Figure 6) or, respectively, in the second position (Figure 8).

With particular reference to Figures 9A and 9B, the refinement grid is provided with a plurality of through holes 35 which contribute to defining the opening 20 for discharging the cut material. In the first position (Figure 9A), the closure element 15 is oriented in a position close to the refinement grid so as to close at least one part of the aforementioned plurality of holes 35, whereas these holes are left substantially open by the closure element 15 when it is in the second position (Figure 9B).

With particular reference to Figures 10A and 10B, a passage 36 is defined between the laminar element and the closure element 15, which passage is preferably completely closed or left open in the case in which the laminar element and the closure element 15 are in the first position (Figure 10A) or, respectively, in the second position (Figure 10B).

At least three holes 21, 22, 23 are provided in each side 3, 4 in order to mount supports 14 of the roller. A pin 26 (for example, a screw with related bolt) is engaged in a first hole 21 in the side and in a corresponding first hole 25 in the support 14, by means of which pin each support 14 is hinged to the corresponding side 3, 4.

A screw 27 is alternatively engaged in a second and third hole 22, 23 in the side 3, 4, which screw passes through a second hole 28 in the support 14 in order to fix the roller to the corresponding side 3, 4 in one position and in the other position, respectively, of said first and second positions.

With reference to the embodiments of the invention illustrated in Figures 9A, 9B, 10A and 10B, the refinement grid and the laminar element are provided, at the respective longitudinal ends, with plates by means of which said end elements 13 can alternatively be mounted on the sides 3, 4.

At least three holes 21, 22, 23 are therefore provided in each side 3,4 in order to mount a plate of said end element 13, a pin being engaged in a first hole 21 in the side 3, 4 and in a corresponding first hole in a plate of said end element 13, by means of which pin each plate is hinged to the corresponding side 3, 4. A screw is alternatively engaged in a second and third hole 22, 23 in the side 3, 4, which screw passes through a second hole in the plate of the end element 13 in order to fix the latter to the corresponding side 3, 4 in one position and in the other position, respectively, of said first and second positions.

According to a preferred embodiment of the invention, a sequence of first holes 21 are made in each side 3, 4 and are arranged along a curvilinear axis so as to be equidistant from the second or third hole 22, 23 in the side 3, 4. This provision allows the number of possible configurations of the chamber 29 to be increased by changing the position of the end element with respect to the sides 3, 4. Alternatively, the first hole 21 can have curvilinear segments, in particular comprise a pair of curvilinear segments that form a substantially V-shaped profile, for the position of the end element 13 to be continuously adjusted with respect to the sides 3, 4.

According to an aspect of the invention and with particular reference to Figures 3 and 4, a plurality of holes 30 are provided in each side 3, 4 in order to fix the closure element 15, by means of its plates 16a, in one position and in the other position, respectively, of said first and second positions.

The plurality of holes 30 is made in the sides 3, 4 so as to allow the closure element 15 to be oriented in the first and in the second position depending on the desired operative configuration of the cutting machine 1.

Provision may be made for the holes 30 to have an elongated shape, preferably with a curvilinear profile, so as to allow the orientation of the closure element 15 to be continuously adjusted with respect to the sides 3, 4.

More generally, the machine according to the invention can comprise fastening means for fastening the closure element 15 to the sides 3, 4 so as to be able to adjust the position of the closure element 15 with respect to the sides 3, 4. A rod 31 of counter-blades 32 can be removably mounted between the sides 3, 4 close to the closure element 15, in particular to the scraper, in order to keep insufficiently cut organic remains in the cutting chamber 29 until they have been completely shredded.

With reference to Figure 5, a corresponding wheel 34 can be mounted disengaged on each side 3, 4. Such a provision is particularly useful for working with vegetables.

The invention as illustrated achieves numerous advantages when compared to traditional cutting machines. Amongst these advantages, the following are highlighted:
- the possibility of adapting one single cutting machine according to the invention to different uses in the agricultural field,
- the possibility of using the cutting machine according to the invention during the whole year and not solely on specific occasions, and
- the possibility of deciding the size of the ground product on account of the possible combinations that the cutting machine according to the invention allows.

## Claims

1. Cutting machine comprising:
- a body (2) having two lateral, juxtaposed sides (3, 4) and a hood (5) mounted between said sides (3, 4) for delimiting a cutting chamber (29), said chamber (29) having a rear opening (20) for discharging the cut material,
- a rotor (11) that is rotatably supported in said chamber (29) between said sides (3, 4),
- an end element (13) supported between said sides (3, 4) at said rear opening (20) of said chamber (29), and
- a closure element (15) supported between said sides (3, 4),
said closure element (15) and said end element (13) being mounted on said sides (3, 4) so as to be movable between a first position, in which said end element (13) is moved back from said rotor (11) and said closure element (15) is oriented in a position close to said end element (13) so as to close said opening (20), at least in part, in order to hold the cut material in the chamber (29) for longer, and a second position, in which said end element (13) is moved closer to the rotor (11) than in the first position, and said closure element (15) is oriented in a position remote from said end element (13) so as to substantially free said opening and to facilitate discharging of the cut material from the chamber (29), **characterised in that** said end element (13) is either a levelling roller and said closure element (15) is a scraper, or said end element (13) is a refinement grid or a laminar element without any holes.

2. Cutting machine according to claim 1, wherein at least three holes (21, 22, 23) are provided in each side (3, 4) in order to mount a support (14) for said roller (13), a pin (26) being engaged in a first hole in the side (21) and in a corresponding first hole (25) in the support (14), by means of which pin each support (14) is hinged to the corresponding side (3, 4), a screw (27) alternatively being engaged in a second and third hole (22, 23) in the side (3, 4) and passing through a second hole (28) in the support (14) in order to fix the roller (13) to the corresponding side (3, 4) in one position and in the other position, respectively, of said first and second positions.

3. Cutting machine according to claim 1, wherein said end element (13) is a refinement grid or a laminar element without any holes and wherein in at least three holes (21, 22, 23) are provided in each side (3, 4) in order to mount a plate of said end element (13), a pin (26) being engaged in a first hole (21) in the side (3, 4) and in a corresponding first hole in a plate of said end element (13), by means of which pin each plate is hinged to the corresponding side (3, 4), a screw (27) alternatively being engaged in a second and third hole (22, 23) in the side (3, 4) and passing through a second hole (28) in the plate of said element (13) in order to fix said end element to the corresponding side (3, 4) in one position and in the other position, respectively, of said first and second positions.

4. Cutting machine according to either claim 2 or claim 3, wherein a sequence of said first holes (21) are made in each side (3, 4) and are arranged along a curvilinear axis so as to be equidistant from the second or third hole (22, 23) in the side (3, 4).

5. Cutting machine according to either claim 2 or claim 3, wherein said first hole (21) comprises a pair of curvilinear segments that form a substantially V-shaped profile.

6. Cutting machine according to one or more of the preceding claims, wherein said cutting machine comprises fastening means for fastening said closure element (15) to said sides (3, 4) so as to be able to adjust the position of said closure element (15) with respect to said sides (3, 4).

7. Cutting machine according to one or more of the preceding claims, wherein a plurality of holes (30) are provided in each side (3, 4) in order to fix said closure element (15) in one position and in the other position, respectively, of said first and second positions.

8. Cutting machine according to one or more of the preceding claims, comprising a rod (31) of counter-blades (32) that is removably mounted between said sides (3, 4) near to said closure element (15).

9. Cutting machine according to one or more of the preceding claims, comprising a frame (6) provided for attachment at three points (10) in order to be mounted on either the front or the back of an agricultural tractor (100).

## Patentansprüche

1. Schneidemaschine, umfassend:
- einen Körper (2) mit zwei seitlichen, nebeneinander liegenden Seiten (3, 4) und einer zwischen den Seiten (3, 4) montierten Haube (5) zur Begrenzung einer Schneidkammer (29), wobei die Kammer (29) eine hintere Öffnung (20) zum Abführen des Schnittgutes aufweist,
- einen Rotor (11), der in der Kammer (29) zwischen den Seiten (3, 4) drehbar gelagert ist,
- ein Endelement (13), das zwischen den Seiten (3, 4) an der hinteren Öffnung (20) der Kammer (29) gelagert wird, und
- ein Verschlusselement (15), das zwischen den Seiten (3, 4) gelagert ist, wobei das Verschlusselement (15) und das Endelement (13) an den Seiten (3, 4) montiert sind, um zwischen einer ersten Position, in der das Endelement (13) vom Rotor (11) zurückbewegt wird und das Verschlusselement (15) in einer Position nahe dem Endelement (13) ausgerichtet ist, um die Öffnung (20) zumindest teilweise zu verschließen, um das Schnittgut länger in der Kammer (29) zu halten, und einer zweiten Position beweglich zu sein, in der das Endelement (13) näher an den Rotor (11) bewegt wird als in der ersten Position, und das Verschlusselement (15) in einer vom Endelement (13) entfernten Position ausgerichtet ist, um die Öffnung im Wesentlichen freizugeben und das Abführen des Schnittguts aus der Kammer (29) zu ermöglichen, **dadurch gekennzeichnet, dass** das Endelement (13) entweder eine Nivellierwalze und das Verschlusselement (15) ein Abstreifer oder das Endelement (13) ein Verfeinerungsgitter oder ein Lamellenelement ohne Löcher ist.

2. Schneidemaschine nach Anspruch 1, wobei zumindest drei Löcher (21, 22, 23) in jeder Seite (3, 4) vorgesehen sind, um eine Halterung (14) für die Walze (13) zu montieren, ein Stift (26) vorgesehen ist, der in ein erstes Loch in der Seite (21) und in ein entsprechendes erstes Loch (25) in der Halterung (14) eingreift, wobei mittels dieses Stifts jede Halterung (14) an der entsprechenden Seite (3, 4) angelenkt ist und eine Schraube (27) vorgesehen ist, die abwechselnd in ein zweites und drittes Loch (22, 23) in der Seite (3, 4) eingreift und durch ein zweites Loch (28) in der Halterung (14) hindurchgeht, um die Walze (13) an der entsprechenden Seite (3, 4) in einer Position bzw. in der anderen Position der ersten und zweiten Position zu fixieren.

3. Schneidemaschine nach Anspruch 1, wobei das Endelement (13) ein Verfeinerungsgitter oder ein laminares Element ohne Löcher ist und wobei in jeder Seite (3, 4) zumindest drei Löcher (21, 22, 23) vorgesehen sind, um eine Platte des Endelements (13) zu montieren, ein Stift (26) vorgesehen ist, der in ein erstes Loch (21) in der Seite (3, 4) und in ein entsprechendes erstes Loch in einer Platte des Endelements (13) eingreift, wobei mittels dieses Stifts jede Platte an der entsprechenden Seite (3, 4) angelenkt ist, eine Schraube (27) vorgesehen ist, die abwechselnd in ein zweites und drittes Loch (22, 23) in der Seite (3, 4) eingreift und durch ein zweites Loch (28) in der Platte des Elements (13) hindurchgeht, um das Endelement an der entsprechenden Seite (3, 4) in einer Position bzw. in der anderen Position der ersten und zweiten Position zu fixieren.

4. Schneidemaschine nach Anspruch 2 oder Anspruch 3, wobei eine Folge von ersten Löchern (21) in jeder Seite (3, 4) ausgebildet und entlang einer kurvenförmigen Achse angeordnet sind, um den gleichen Abstand vom zweiten oder dritten Loch (22, 23) in der Seite (3, 4) aufzuweisen.

5. Schneidemaschine nach Anspruch 2 oder Anspruch 3, wobei das erste Loch (21) ein Paar von kurvenförmigen Segmenten aufweist, die ein im Wesentlichen V-förmiges Profil bilden.

6. Schneidemaschine nach einem oder mehreren der vorhergehenden Ansprüche, wobei die Schneidemaschine Befestigungsmittel zum Befestigen des Verschlusselements (15) an den Seiten (3, 4) aufweist, um die Position des Verschlusselements (15) in Bezug auf die Seiten (3, 4) einstellen zu können.

7. Schneidemaschine nach einem oder mehreren der vorhergehenden Ansprüche, wobei eine Mehrzahl von Löchern (30) in jeder Seite (3, 4) vorgesehen ist, um das Verschlusselement (15) in einer Position bzw. in der anderen Position der ersten und zweiten Position zu fixieren.

8. Schneidemaschine nach einem oder mehreren der vorhergehenden Ansprüche, die eine Stange (31) mit Gegenmessern (32) aufweist, die zwischen den Seiten (3, 4) in der Nähe des Verschlusselements (15) abnehmbar montiert ist.

9. Schneidmaschine nach einem oder mehreren der vorhergehenden Ansprüche, die einen Rahmen (6) aufweist, der zur Befestigung an drei Punkten (10) vorgesehen ist, um entweder an der Vorderseite oder an der Rückseite eines landwirtschaftlichen Traktors (100) montiert zu werden.

## Revendications

1. Machine de coupe comprenant :
- un corps (2) présentant deux côtés (3, 4) juxtaposés latéraux et une hotte (5) montée entre lesdits côtés (3, 4) pour délimiter une chambre (29) de coupe, ladite chambre (29) présentant une ouverture (20) arrière pour évacuer le matériau découpé,
- un rotor (11) qui est soutenu de manière rotative dans ladite chambre (29) entre lesdits côtés (3, 4),
- un élément d'extrémité (13) soutenu entre lesdits côtés (3, 4) au niveau de ladite ouverture (20) arrière de ladite chambre (29), et
- un élément de fermeture (15) soutenu entre lesdits côtés (3, 4), ledit élément de fermeture (15) et ledit élément d'extrémité (13) étant montés sur lesdits côtés (3, 4) de manière à être mobiles entre une première position, dans laquelle ledit élément d'extrémité (13) est déplacé en arrière depuis le rotor (11) et ledit élément de fermeture (15) est orienté dans une position proche de l'élément d'extrémité (13) de manière à fermer ladite ouverture (20), au moins en partie, pour maintenir le matériau découpé dans la chambre (29) plus longtemps, et une seconde position, dans laquelle ledit élément d'extrémité (13) est déplacé plus près du rotor (11) que dans la première position, et ledit élément de fermeture (15) est orienté dans une position éloignée dudit élément d'extrémité (13) de manière à libérer sensiblement ladite ouverture et à faciliter l'évacuation du matériau découpé de la chambre (29), **caractérisée en ce que** ledit élément d'extrémité (13) est un rouleau de nivellement et ledit élément de fermeture (15) est un racloir, ou ledit élément d'extrémité (13) est une grille d'affinage ou un élément laminaire dépourvu de tout trou.

2. Machine de coupe selon la revendication 1, dans laquelle au moins trois trous (21, 22, 23) sont prévus dans chaque côté (3, 4) pour monter un support (14) pour ledit rouleau (13), une goupille (26) étant mise en prise dans un premier trou dans le côté (21) et un premier trou (25) correspondant dans le support (14), goupille au moyen de laquelle chaque support (14) est articulé au côté (3, 4) correspondant, une vis (27) étant mise en prise alternativement dans un deuxième et un troisième trou (22, 23) et passant à travers un second trou (28) dans le support (14) pour fixer le rouleau (13) au côté (3, 4) correspondant dans une position et dans l'autre position, respectivement, desdites première et seconde positions.

3. Machine de coupe selon la revendication 1, dans laquelle ledit élément d'extrémité (13) est une grille d'affinage ou un élément laminaire dépourvu de tout trou, et dans laquelle au moins trois trous (21, 22, 23) sont prévus dans chaque côté (3, 4) pour monter une plaque dudit élément d'extrémité (13), une goupille (26) étant mise en prise dans un premier trou (21) dans le côté (3, 4) et dans un premier trou correspondant dans une plaque dudit élément d'extrémité (13), goupille au moyen de laquelle chaque plaque est articulée au côté (3, 4) correspondant, une vis (27) étant mise en prise alternativement dans un deuxième et un troisième trou (22, 23) dans le côté (3, 4) et passant à travers un second trou (28) dans la plaque dudit élément (13) pour fixer ledit élément d'extrémité au côté (3, 4) correspondant dans une position et dans l'autre position, respectivement, desdites première et seconde positions.

4. Machine de coupe selon la revendication 2 ou la revendication 3, dans laquelle une séquence desdits premiers trous (21) est réalisée dans chaque côté (3, 4) et est agencée le long d'un axe curviligne de manière à être à égale distance du deuxième ou du troisième trou (22, 23) dans le côté (3, 4).

5. Machine de coupe selon la revendication 2 ou la revendication 3, dans laquelle ledit premier trou (21) comprend une paire de segments curvilignes qui forment un profil sensiblement en forme de V.

6. Machine de coupe selon l'une ou plusieurs des revendications précédentes, dans laquelle ladite machine de coupe comprend des moyens de fixation pour fixer ledit élément de fermeture (15) auxdits côtés (3, 4) de manière à pouvoir ajuster la position dudit élément de fermeture (15) par rapport auxdits côtés (3, 4).

7. Machine de coupe selon l'une ou plusieurs des revendications précédentes, dans laquelle une pluralité de trous (30) sont prévus dans chaque côté (3, 4) pour fixer ledit élément de fermeture (15) dans une position et dans l'autre position, respectivement, desdites première et seconde positions.

8. Machine de découpe selon l'une ou plusieurs des revendications précédentes, comprenant une tige (31) de contre-lames (32) qui est montée de manière amovible entre lesdits côtés (3, 4) à proximité dudit élément de fermeture (15).

9. Machine de coupe selon l'une ou plusieurs des revendications précédentes, comprenant un cadre (6) prévu pour une attache en trois points (10) pour être monté sur l'avant ou l'arrière d'un tracteur agricole (100).
